# EUROPÄISCHE PATENTSCHRIFT

(11) **EP 1 525 120 B1**
(45) Veröffentlichungstag und Bekanntmachung des Hinweises auf die Patenterteilung: **23.04.2008**
(21) Anmeldenummer: 03717111.3
(22) Anmeldetag: 26.02.2003
(51) Int. Cl.: B60R 21/015

(54) **VERFAHREN BEI DER KLASSIFIZIERUNG VON EINEN SITZ BELEGENDEN OBJEKTEN**
METHOD FOR THE CLASSIFICATION OF OBJECTS OCCUPYING A SEAT
PROCEDE UTILISE DANS LE CADRE DE LA CLASSIFICATION D'OBJETS QUI OCCUPENT UN SIEGE

(30) Priorität: 20.07.2002 DE 10233098
(43) Veröffentlichungstag der Anmeldung: 27.04.2005
(73) Patentinhaber: ROBERT BOSCH GMBH, 70442 Stuttgart (DE)
(72) Erfinder: MARCHTHALER, Reiner, 73333 Gingen (DE)
(86) Internationale Anmeldenummer: PCT/DE2003/000615
(87) Internationale Veröffentlichungsnummer: WO 2004/016476

(56) Entgegenhaltungen:
- US-A- 5 570 903
- US-A- 5 983 147
- US-B1- 6 282 473
- US-B1- 6 330 501

## Beschreibung

### Stand der Technik

Die Erfindung betrifft ein Verfahren bei der Klassifizierung bei einen Sitz belegenden Objekten, insbesondere für die klassifizierungsabhängige Ansteuerung von Rückhaltesystemen in Fahrzeugen.

Zum Schutz der Insassen eines Fahrzeuges bei Unfällen ist es allgemein üblich, die Sitze des Fahrzeuges nicht nur mit reversiblen Rückhaltemitteln, wie Sicherheitsgurten, sondern auch mit irreversiblen Rückhaltemitteln, wie Airbags, auszurüsten, die im Falle der Erfassung eines Unfalles ausgelöst, z. B. pyrotechnisch gezündet werden.

Ein fehlerhaftes Zünden oder ein Zünden zum falschen Zeitpunkt, selbst bei Vorliegen eines Unfalles, kann jedoch zu erheblichen Verletzungen führen, die nicht auftreten würden, wenn der Airbag nicht gezündet würde oder, bei mehrstufigen Airbags, in anderer Weise gezündet würden. Ferner ist ein unnötiges Zünden zu vermeiden, insbesondere wenn der Sitz nicht belegt ist oder nur einen Gegenstand trägt, jedoch keine Person.

Nach dem Stand der Technik ist es beispielsweise bekannt, Kindersitze zu erkennen (US-A-5,570,903), etwa mittels in der Sitzfläche des Sitzes angeordneten Sensoren, oder den Belegungszustand zu erfassen (US-A-5,983,147) z. B. durch Videoüberwachung.

Dies ist allerdings noch nicht ausreichend. Vielmehr ist es erforderlich, zur Vermeidung von für die jeweilige Situation ungünstigen, gegebenenfalls sogar gefährlichen, Auslösungen zu erfassen, ob eine den Sitz belegende Person groß oder klein, schwer- oder leichtgewichtig, sich nahe dem Armaturenbrett oder im Sitz zurückgelehnt befindet. Abhängig von der jeweiligen Situation sind im Falle eines Unfalles die Rückhaltemittel in unterschiedlicher Weise anzusteuern, was insbesondere für einen mehrstufig zündbaren Airbag, insbesondere wiederum bei einem Beifahrer-Airbag gilt. Ausreichend hat sich die Einteilung in Gruppen, eine Klassifizierung, erwiesen.

Hierzu ist bisher das sogenannte OC-System (Occupant classification System) entwickelt worden. Dieses System beruht auf einem empirisch festgestellten Zusammenhang zwischen dem Körpergewicht und dem Abstand der Sitzhöcker einer Person. Somit kann mittels z. B. matrixartig angeordneten Drucksensoren in einem Sitz ein Druckprofil erfasst und analysiert werden. Diese Analyse erlaubt zunächst auch die Erfassung, ob es sich um einen belegten oder nicht-belegten Sitz handelt. Ferner kann unterschieden werden, ob bei einem belegten Sitz ein Kindersitz oder ein sonstiger Gegenstand oder eine Person vorhanden ist.

Ist als Objekt eine Person erkannt worden, kann durch entsprechende Analyse des Druckprofils ferner eine weitere Klassifizierung aufgrund empirischer Erkenntnisse erfolgen, die mit der Körpergröße und dem Körpergewicht der sitzenden Person korrespondieren. Ferner kann mittels geeigneter Sensoren auch das absolute Gewicht des Objektes in dem Sitz erkannt werden. Beispielsweise kann das Gewicht des Sitzes mit dem Objekt, z. B. mit Hilfe von Dehnungsmessstreifen gemessen werden. Andererseits kann auch mittels eines im Sitz selbst eingebauten Sensors, wie einer Druckfolie, der Druckunterschied zwischen einem belegten und einem unbelegten Sitz, und damit also das absolute Gewicht des Objektes erfasst werden.

Die herkömmliche Klassifizierung nutzt empirische Erkenntnisse, die im jeweils interessierenden Einzelfall, allerdings zu falschen Ergebnissen bei der Ansteuerung der Auslösung von Rückhaltemitteln führen kann.

Aus US 6,282,473 B1, als nächstliegender Stand der Technik betrachtet, ist es bekannt, in Abhängigkeit von einem Beschleunigungssignal die Bearbeitung der Signale von einem Gewichtssensor und einem Positionssensor zu beeinflussen, wobei in Abhängigkeit vom Beschleunigungssignal zwischen einem statischen Modus und einem dynamischen Modus ausgewählt wird. Beim statischen Modus werden die letzten Abtastwerte der Signale der Innenraumsensierung verwendet, während beim dynamischen Modus eine Mehrzahl von Abtastwerten für die Bearbeitung verwendet wird.

### Vorteile der Erfindung

Ausgehend hiervon ist es demnach Aufgabe der vorliegenden Erfindung, die Richtigkeit einer Klassifizierung zu verbessern.

Die Aufgabe wird durch die Merkmale des Anspruches 1 gelöst. Die Erfindung wird durch die Merkmale der Unteransprüche weitergebildet.

Die Erfindung geht zunächst von der Erkenntnis aus, dass höhere Redundanz der ermittelten Größe zu der erwünschten Verbesserung führt. Ferner baut die Erfindung auf der Erkenntnis auf, dass aufgrund der Dynamik eines Fahrzeuges auch ein Objekt im betrachteten Sitz dynamisch auf das Objekt wirkenden Kräften ausgesetzt ist. Diese dynamischen Kräfte sind darüber hinaus messbar, d. h. ihrer Größe nach feststellbar. Die Kenntnis dieser Kräfte und die Art der Änderung der Position des Objektes aufgrund dieser Kräfte erlauben es, sehr genau aufgrund bekannter physikalischer Gesetze auf körperliche Größen des Objektes, insbesondere einer im Sitz sitzenden Person zu schließen, wie Masse, Höhe des Massenschwerpunktes (über dem Sitz), Höhe/Breite-Verhältnis dieses Schwerpunktes. Diese Größen erhöhen die Redundanz bei der Bestimmung relevanter Größen, aufgrund deren bei Vorliegen eines Unfalles die Ansteuerung der Auslösemittel durchgeführt wird. Insbesondere ist die

Diskriminierung und im gegebenen Fall die Klassifizierung der einen Sitz belegenden Person im Hinblick auf diejenigen Größen verbessert, die für die Ansteuerung der Auslösemittel von Bedeutung sind. Dafür können herkömmliche und möglicherweise schon vorhandene Innenraumsysteme zur Ermittlung der hier relevanten (zusätzlichen) Größe verwendet werden, so dass es keiner oder nur weniger neuer zusätzlicher Sensoren bedarf. Solche Innenraumerkennungssysteme sind eine Videoüberwachung, eine Erfassung der absoluten Gewichte mittels Dehnungsmessstreifen, eine Ultraschallsanierung, Radarsysteme, eine OC-Gittermatte und dgl..

Es ist zu erwähnen, dass es aus der älteren Anmeldung .... (internes Aktenzeichen R.39531) an sich bekannt ist, die Dynamik eines Druckprofils zu erfassen, das durch eine sitzende Person auf den Sitz ausgeübt wird, und daraus einen Dynamikfaktor abzuleiten, der angibt, ob sich das Objekt bzw. die Person in Ruhe befindet oder sich bewegt. Diese Information erlaubt eine Bewertung, ob der Dynamikfaktor auf ein starres Objekt oder auf eine Person zurückgeht, da diese anderes dynamisches Verhalten haben, und damit eine entsprechende Berücksichtigung dieser Information bei der Frage, ob ein Auslösemittel angesteuert werden soll oder nicht.

### Zeichnung

Die Erfindung wird anhand des in der Zeichnung erläuterten schematischen Ausführungsbeispiels näher erläutert. Es zeigen:
- Fig. 1: schematisch eine Anordnung zur Durchführung dar erfindungsgemäßen Vorgehensweise,
- Fig. 2: schematisch eine Prinzipskizze der Funktion der erfindungsgemäßen Vorgehensweise.

### Beschreibung eines Ausführungsbeispieles

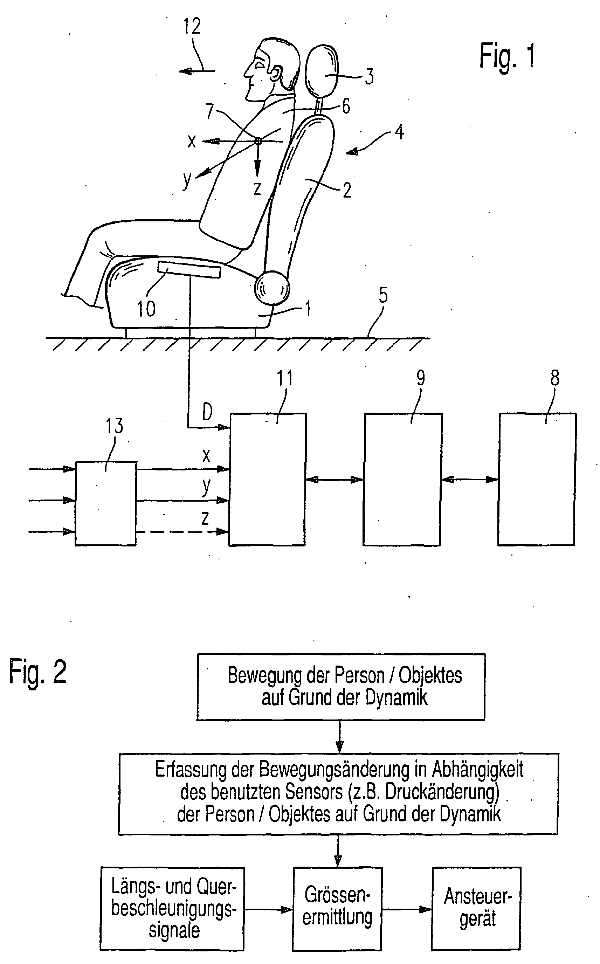

Fig. 1 zeigt eine aus einer Sitzfläche 1, einer Rücklehne 2 und einer Kopfstütze 3 bestehenden Sitz 4 in einem schematisch dargestellten Kraftfahrzeug 5. Fig. 1 zeigt ferner eine im Sitz 4 sitzende Person 6 als Objekt und schematisch den Schwerpunkt 7 dieser Person 6. Dem Sitz 4 sind zum Schutze der Person 6 im Falle eines Unfalles oder einer anderen gefährlichen Situation Rückhaltsysteme in an sich bekannter Weise zugeordnet. Durch einen Block sind irreversibel ansteuerbare Rückhaltesysteme 8, wie Airbags, pyrotechnisch zündbare Gurtstrammer und dergleichen, schematisch dargestellt. Diese Rückhaltesysteme 8 werden von einem Ansteuergerät 9 aus ausgelöst bzw. gezündet, wenn aufgrund erfasster und ermittelter Kriterien von einem für die Person 6 gefährlichen Ereignis auszugehen ist.

Wie an sich bekannt und nicht näher erläutert, wird zunächst erfasst, ob der Sitz 4 bzw. dessen Sitzfläche 1 überhaupt belegt ist, denn wenn der Sitz 4 nicht belegt ist, kommt eine Auslösung der Rückhaltesysteme 8 über das Steuergerät 9 nicht in Frage.

Ferner ist wesentlich, dass die Rückhaltesysteme 8 nur ausgelöst werden, wenn sich eine Person 6 im Sitz 4 befindet, nicht jedoch wenn sich ein Objekt, wie etwa auch ein Kindersitz in dem Sitz 4 befindet. Die Diskriminierung zwischen einer im Sitz 4 befindlichen Person 6 und eine im Sitz 4 befindlichen Objekt kann beispielsweise und insbesondere dadurch erreicht werden, dass die auf die Sitzfläche 1 wirkende Druckverteilung, das Druckprofil, erfasst wird, was in Fig. 1 durch einen Drucksensor 10 schematisch dargestellt ist. Eine Person 6 wirkt über zwei beabstandete Sitzhöcker auf die Sitzfläche 1 und damit den Drucksensor 10 ein, während Objekt, auch Kindersitze, gemäß einem deutlich anderen Druckprofil auf den Drucksensor 10 einwirken.

Ein solches Druckprofil ist durch mindestens 2, vorzugsweise 3 oder 4, individuell beabstandete Drucksensoren in Sitz 4 bzw. der Sitzfläche 1 ermittelbar. Von besonderem Vorteil ist eine Matrixanordnung von Drucksensoren im Sinne einer sogenannten OC-Matte.

Das einem solchen Druckprofil entsprechende Signal D bzw. eine entsprechende Gruppe von Signalen erlaubt im übrigen in herkömmlicher Weise auch die Feststellung des Belegungszustandes des Sitzes 4 als solches und auch die Feststellung der auf den Sitz 4 bzw. die Sitzfläche 1 wirkenden Masse, etwa entsprechend der im Schwerpunkt 7 der (ruhigsitzenden) Person 6 wirkenden vertikalen Kraftkomponente z.

Beispielsweise kann aus dem Sitzhöckerabstand, der mittels des Drucksensors 10 ermittelbar ist, und dieser Gewichtskomponente bzw. z-Komponente aufgrund empirischer Daten bereits auf die Größe der Person 6 bzw. der Höhe des Schwerpunkts 7 der Person 6 schon geschlossen werden, also eine Klassifizierung durchgeführt werden kann.

D. h., das Signal D erlaubt es einer Ansteuerschaltung 11 der Masse der Person 6 und/oder dem Schwerpunkt 7 der Person 6 entsprechende Signale für die Berechnung von Steuersignalen für das Ansteuergerät 9 alleine oder auch zusammen mit anderen Signalen heranzuziehen. Im letzteren wird bereits die Redundanz verbessert.

Gemäß der Erfindung ist eine sehr exakte Bestimmung der Lage des Schwerpunktes 7 der Person 6 möglich, wenn die Beschleunigung der Person 6, und damit insbesondere dessen Schwerpunktes 7, in einer. Horizontalebene zumindest qualitativ erfasst wird. Im Falle eines Aufpralles auf ein Hindernis ist die Person 6 und damit deren Schwerpunkt 7 einer durch einen Pfeil 12 dargestellten dynamischen Bewegung unterworfen, wobei diese Bewegung in der Horizontalebene als ungebremst angesehen werden kann und damit der mittels fahrzeugseitiger Sensoren ermittelten Beschleunigung des Fahrzeuges 5 gleichgesetzt werden kann. D. h., mit mindestens zwei Beschleunigungssensoren in einer Horizontalebene im Fahrzeug 5 (nicht im einzelnen dargestellt) lässt sich die dynamische Bewegung, d. h. die Beschleunigungsbewegung der Person 6 bzw. deren Schwerpunkt 7 in einer Horizontalebene bestimmen. Dies ist in Fig. 1 durch eine x-Komponente und eine y-Komponente schematisch dargestellt.

In Fig. 1 ist dies ferner auch dadurch schematisch dargestellt, dass eine Rechenschaltung 13 externe Signale, wie etwa von entsprechenden Beschleunigungssensoren empfängt und zur Berechnung der x- und y-Komponente heranzieht und auswertet und der Ansteuerschaltung 11 zuführt. In Strichlinien ist dargestellt, dass mittels solcher Sensoren gegebenenfalls auch die z-Komponente (zusätzlich) ermittelt werden kann. Diese kann auch, wie erwähnt, ausgehend von dem Signal D ermittelt werden.

Die durch den Pfeil 12 dargestellte Dynamik der Person 6 bestimmt somit also die Art der Änderung der Position der Person 6 aufgrund von von Außen einwirkenden Kräften. Sind diese Kräfte auch der Größe nach bekannt, lässt sich die tatsächlich vorliegende Position der Person 6 und deren Schwerpunktes 7 äußerst genau bestimmen (vgl. z. B. Gillespie, T. D., Fundamentals of Vehicle Dynamics, Society of Automotive Engineers Inc., Warrendale, USA, 1992, und/oder Kuypers, F., Klassische Mechanik, 3. Aufl., VHC Verlagsgesellschaft mbH, Weinheim, 1990) und im Sinne einer durch Redundanz verbesserten Erfassung zur Klassifizierung zum Zwecke der Auslösung der Rückhaltesysteme 8 heranzuziehen. Jedenfalls zusammen mit anderen Größen lassen sich ferner, im wesentlichen sogar redundant, Masse, Höhe des Schwerpunktes 7 aber auch das Höhe/Breite-Verhältnis des Schwerpunktes 7 bestimmen (wobei Breite hier ein Maß für die insbesondere seitliche Verlagerung des Schwerpunktes bei einer Kippbewegung darstellt) und zur Klassifizierung zum Zweck einer möglichst optimalen Ansteuerung der Rückhaltesysteme 8, insbesondere eines Airbags, mittels des Steuergerätes 9 abhängig von der jeweiligen gefährlichen Situation heranziehen.

Das vorstehend erläuterte Funktionsprinzip ist nochmals in Fig. 2 dargestellt.

Nachdem die für die geschilderte Nutzung der Dynamik der Person 6 notwendigen Signale üblicherweise bereits im Fahrzeug ermittelt werden, sind auch zusätzliche Sensoren nicht mehr erforderlich.

## Patentansprüche

1. Verfahren bei der Klassifizierung von einen Sitz (4) belegenden Objekten, insbesondere für die klassifizierungsabhängige Ansteuerung von Rückhaltesystemen (8) in Fahrzeugen (5), wobei die in einer Horizontalebene auf das Objekt (6) einwirkenden Kräfte der Größe nach erfasst werden, dass die auf den Sitz (4) durch das Objekt (6) wirkenden Kräfte in einer zur Horizontalebenen vertikalen Richtung der Größe nach erfasst werden, **dadurch gekennzeichnet, dass** zumindest die zeitliche Änderung der auf das Objekt wirkenden Kräfte erfasst wird und aus den Größen der erfassten Kräfte und der Art deren zeitlichen Änderung zumindest körperlichen Größen des Objektes (6) bestimmt und zu der Klassifizierung herangezogen werden, indem aus einer Kenntnis dieser Kräfte und einer Art einer Änderung einer Position des Objektes (6) aufgrund dieser Kräfte aufgrund bekannter physikalischer Gewichte auf die körperlichen Größen des Objektes (6) geschlossen wird.

2. Verfahren nach Anspruch 1, **dadurch gekennzeichnet, dass** aus den erfassten Kräften die Lage des Schwerpunkts (7) des Objektes, die Masse (das Gewicht) und/oder die Höhe des Schwerpunktes (7) des Objektes (6) und/oder das Höhen/Breiten-Verhältnis des Schwerpunktes (7) des Objekts (6) berechnet werden.

3. Verfahren nach Anspruch 1 oder 2, **dadurch gekennzeichnet, dass** zusammen mit anderen Kenngrößen des Objektes (6) die genannten körperlichen Größen zu der Klassifizierung herangezogen werden.

4. Verfahren nach einem der Ansprüche 1 bis 3, **dadurch gekennzeichnet, dass** die auf das Objekt (6) wirkenden äußeren Kräfte dynamischen Kräfte sind.

5. Verfahren nach einem der Ansprüche 1 bis 4, **dadurch gekennzeichnet, dass** ausgehend von in vertikaler Richtung auf den Sitz (4) wirkenden Kräften und deren Verteilung im Sitz (4) zwischen einem Gegenstand und einer Person (6) als Objekt diskriminiert wird und die Klassifizierung nur dann durchgeführt wird, wenn eine Person (6) als Objekt diskriminiert worden ist.

6. Verfahren nach Anspruch 5, **dadurch gekennzeichnet, dass** zur Diskriminierung das auf den Sitz (4) bzw. dessen Sitzfläche (1) wirkende Druckprofil erfasst und diskriminiert wird.

## Claims

1. Method for the classification of objects occupying a seat (4), in particular for the classification-dependent actuation of restraint systems (8) in vehicles (5), wherein the size of the forces acting on the object (6) in a horizontal plane is sensed and the size of the forces acting on the seat (4) through the object (6) in a vertical direction with respect to the horizontal plane is sensed, **characterized in that** at least the changeover time in the forces acting on the object is sensed and at least physical sizes of the object (6) are determined from the sizes of the sensed forces and the way in which they change over time, and said physical sizes are used for the purpose of the classification **in that** the physical sizes of the object (6) are concluded from knowledge of these forces and the way in which the position of the object (6) changes owing to these forces owing to known physical weights.

2. Method accord to Claim 1, **characterized in that** the position of the centre (7) of gravity of the object, the mass (the weight) and/or the height of the centre (7) of gravity of the object (6) and/or the height/width ratio of the centre (7) of gravity of the object (6) are calculated from the sensed forces.

3. Method according to Claim 1 or 2, **characterized in that** the aforesaid physical sizes are used for the classification together with other characteristic variables of the object (6).

4. Method according to one of Claims 1 to 3, **characterized in that** the external forces acting on the object (6) are dynamic forces.

5. Method according to one of Claims 1 to 4, **characterized in that** an item and a person (6) are differentiated as the object on the basis of forces acting on the seat (4) in the vertical direction and the distribution of said forces in the seat (4), and the classification is carried out only if a person (6) has been differentiated as the object.

6. Method according to Claim 5, **characterized in that**, for the purpose of the differentiation, the pressure profile acting on the seat (4) or its sitting surface (1) is sensed and differentiated.

## Revendications

1. Procédé de classification d'objets posés sur un siège (4) notamment pour la commande d'un système de retenue (8) en fonction de la classification dans des véhicules automobiles (5) selon lequel on saisit l'amplitude des forces agissant dans un plan horizontal sur l'objet (6),
on saisit l'amplitude des forces exercées par l'objet (6) sur le siège dans une direction verticale par rapport au plan horizontal,
**caractérisé en ce que**
on saisit au moins la variation dans le temps des forces agissant sur l'objet et à partir de l'amplitude des forces saisies et de la nature de leur variation dans le temps, on détermine au moins les grandeurs physiques de l'objet (6) et on les utilise pour la classification **en ce qu'**à partir de la connaissance de ces forces et de la nature d'une variation de position de l'objet (6), du fait de ces forces et des poids physiques connus, on conclut à la dimension corporelle des objets (6).

2. Procédé selon la revendication 1,
**caractérisé en ce qu'**
à partir des forces saisies on calcule la position du centre de gravité (7) de l'objet, la masse (le poids) et/ou la hauteur du centre de gravité (7) de l'objet (6) et/ou le rapport hauteur/largeur du centre de gravité (7) de l'objet (6).

3. Procédé selon la revendication 1 ou 2,
**caractérisé en ce qu'**
avec d'autres grandeurs caractéristiques de l'objet (6) on utilise les grandeurs corporelles indiquées pour la classification.

4. Procédé selon l'une des revendications 1 à 3,
**caractérisé en ce que**
les forces extérieures agissant sur l'objet (6) sont des forces dynamiques.

5. Procédé selon l'une des revendications 1 à 4,
**caractérisé en ce qu'**
à partir des forces agissant dans la direction verticale sur le siège (4) et de leur répartition sur le siège (4), on distingue entre un objet et une personne (6) et on n'effectue la classification que si une personne (6) a été discriminée comme objet.

6. Procédé selon la revendication 5,
**caractérisé en ce qu'**
on saisit le profil de pression agissant sur le siège (4) ou sa surface d'assise (1) pour la discrimination et on effectue la discrimination.
